(19) Europäisches Patentamt
European Patent Office
Office européen des brevets

(11) EP 4 355 587 B1

(12) # FASCICULE DE BREVET EUROPEEN

(45) Date de publication et mention de la délivrance du brevet:
**28.05.2025 Bulletin 2025/22**

(21) Numéro de dépôt: **22733692.2**

(22) Date de dépôt: **30.05.2022**

(51) Classification Internationale des Brevets (IPC):
***B60C 1/00*** (2006.01) ***C08L 47/00*** (2006.01)
***C08F 210/02*** (2006.01) ***C08L 23/08*** (2025.01)

(52) Classification Coopérative des Brevets (CPC):
(C-Sets disponibles)
**C08F 210/02; B60C 1/00; C08L 47/00** (Cont.)

(86) Numéro de dépôt international:
**PCT/FR2022/051014**

(87) Numéro de publication internationale:
**WO 2022/263737 (22.12.2022 Gazette 2022/51)**

(54) **COMPOSITION DE CAOUTCHOUC A BASE DE COPOLYMERE CONTENANT DES UNITES ETHYLENE ET DES UNITES DIENIQUES, ET DE POLYETHYLENE**

KAUTSCHUKZUSAMMENSETZUNG AUF BASIS EINES ETHYLEN- UND DIENEINHEITEN ENTHALTENDEN COPOLYMERS UND POLYETHYLEN

RUBBER COMPOSITION BASED ON A COPOLYMER CONTAINING ETHYLENE UNITS AND DIENE UNITS, AND POLYETHYLENE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.06.2021 FR 2106304**

(43) Date de publication de la demande:
**24.04.2024 Bulletin 2024/17**

(73) Titulaire: **COMPAGNIE GENERALE DES ETABLISSEMENTS MICHELIN**
**63000 Clermont-Ferrand (FR)**

(72) Inventeurs:
- **PIBRE, Guillaume**
  **63040 CLERMONT-FERRAND Cedex 9 (FR)**
- **LAFORT, François**
  **63040 CLERMONT-FERRAND Cedex 9 (FR)**
- **VASSEUR, Didier**
  **63040 CLERMONT-FERRAND Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**WO-A1-2020/038761** **WO-A1-2020/038762**
**WO-A1-2020/038763** **FR-A1- 3 100 811**
**FR-A1- 3 100 815**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC):
(Cont.)

C-Sets
**C08F 210/02, C08F 4/52;**
**C08L 47/00, C08L 23/06, C08K 5/14;**
C08F 210/02, C08F 236/02, C08F 232/04,
C08F 2500/27, C08F 2500/34

## Description

La présente invention est relative aux compositions de caoutchouc destinées notamment à la fabrication de pneumatiques, en particulier des compositions de caoutchouc constituant une couche interne d'un pneumatique, notamment la sous-couche de la bande de roulement du pneumatique.

La réduction des émissions de gaz à effet de serre des transports est un des défis majeurs auquel les manufacturiers de pneumatiques sont confrontés. Le pneumatique constitue une source importante de progrès, par le biais d'un abaissement de la résistance au roulement, car celle-ci a un impact direct sur la consommation de carburant des véhicules.

Il est possible de définir au sein du pneumatique trois types de zones :

- La zone radialement extérieure et en contact avec l'air ambiant, cette zone étant essentiellement constituée de la bande de roulement et du flanc externe du pneumatique. Un flanc externe est une couche élastomérique disposée à l'extérieur de l'armature de carcasse par rapport à la cavité interne du pneumatique, entre le sommet et le bourrelet de sorte à couvrir totalement ou partiellement la zone de l'armature de carcasse s'étendant du sommet au bourrelet.
- La zone radialement intérieure et en contact avec le gaz de gonflage, cette zone étant généralement constituée par la couche étanche aux gaz de gonflage, parfois appelée couche étanche intérieure ou gomme intérieure (« inner liner » en anglais).
- La zone interne du pneumatique, c'est-à-dire celle comprise entre les zones extérieure et intérieure. Cette zone inclut des couches ou nappes qui sont appelées ici couches internes du pneumatique. Ce sont par exemple des nappes carcasses, des sous-couches de bande de roulement, des nappes de ceintures de pneumatiques ou tout autre couche qui n'est pas en contact avec l'air ambiant ou le gaz de gonflage du pneumatique.

Les compositions de caoutchouc constitutives des couches internes du pneumatique, en particulier la sous-couche de la bande de roulement et/ou les couches internes de la zone du bourrelet doivent présenter une rigidité suffisante, que ce soit pour améliorer le comportement routier dans le cas de la sous-couche de la bande de roulement, ou pour reprendre les tensions de l'armature de carcasse et transmettre les efforts subis par le pneumatique du flanc vers la jante, pour ce qui est du bourrelet.

Pour obtenir des compositions de caoutchouc présentant une rigidité élevée, il a été proposé d'introduire dans ces compositions de caoutchouc de fortes quantités de charges renforçantes. Toutefois, cette solution pénalise l'hystérèse impactant négativement la résistance au roulement.

Une autre solution pour augmenter la rigidité d'une composition de caoutchouc consiste à utiliser des résines renforçantes telles que des résines phénoplastes. Toutefois, cette solution entraine également une augmentation de l'hystérèse, mais aussi généralement une dégradation des propriétés limites. De plus, l'utilisation de telles résines peut être un désavantage du point de vue de l'hygiène et de l'environnement car certaines de résines libèrent du formaldéhyde lors de la fabrication du pneumatique.

Diminuer l'hystérèse, en abaissant, voire en supprimant, le taux de charge renforçante, des compositions de caoutchouc, tout en conservant une rigidité élevée, et ce sans utiliser de résines renforçantes, demeure donc encore une vraie difficulté technique pour les manufacturiers de pneumatiques.

Poursuivant ses recherches, la demanderesse a trouvé, de manière surprenante, que l'utilisation d'une polyoléfine spécifique dans une composition de caoutchouc permettait de remplacer tout ou partie de la charge renforçante et d'obtenir une diminution significative de l'hystérèse tout en préservant, voire en améliorant, la rigidité de ladite composition de caoutchouc, notamment à basse déformation, et ce en préservant, voire en améliorant, également les propriétés limites de la composition de caoutchouc, notamment l'allongement rupture et la contrainte rupture.

Ainsi, un objet de l'invention est une composition de caoutchouc à base :

- d'une matrice élastomère contenant plus de 50 pce d'au moins un copolymère contenant des unités éthylène et des unités diéniques,
- de 0 à 50 pce de charge renforçante,
- d'au moins 3 pce d'un polyéthylène et
- d'un système de réticulation.

Un autre objet de l'invention est un pneumatique comprenant une composition selon l'invention.

## I- DÉFINITIONS

Par l'expression « à base de » utilisée pour définir les constituants d'un système catalytique ou d'une

composition, on entend le mélange de ces constituants, ou le produit de la réaction d'une partie ou de la totalité de ces constituants entre eux, au moins partiellement, lors des différentes phases de fabrication du système catalytique ou de la composition. Dans le cas d'une composition, celle-ci peut ainsi être à l'état totalement ou partiellement réticulé ou à l'état non-réticulé.

Par « matrice élastomère », on entend l'ensemble des élastomères de la composition, y compris le copolymère défini ci-dessous.

Par l'expression « partie en poids pour cent parties en poids d'élastomère » (ou pce), il faut entendre au sens de la présente invention, la part, en masse pour cent parties d'élastomère présent dans la composition de caoutchouc considérée.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Lorsqu'on fait référence à un composé "majoritaire", on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères. Au contraire, un composé "minoritaire" est un composé qui ne représente pas la fraction massique la plus grande parmi les composés du même type. De préférence par majoritaire, on entend présent à plus de 50%, de préférence plus de 60%, 70%, 80%, 90%, et plus préférentiellement le composé « majoritaire » représente 100%.

Dans la présente demande, on entend par « l'ensemble des unités monomères du copolymère » ou « la totalité des unités monomères du copolymère » tous les motifs de répétitions constitutifs du copolymère qui résultent de l'insertion des monomères dans la chaîne copolymère par polymérisation. Sauf indication contraire, les teneurs en une unité monomère ou motif de répétition dans le copolymère d'éthylène et de 1,3-diène sont données en pourcentage molaire calculé sur la base de l'ensemble des unités monomères du copolymère.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage. Sont concernés notamment les polymères, les plastifiants, les charges, etc.

Sauf indications contraires, toutes les valeurs de température de transition vitreuse « Tg » décrite dans la présente sont mesurées de manière connue par DSC (Differential Scanning Calorimetry) selon la norme ASTM D3418 (1999).

## II- DESCRIPTION DE L'INVENTION

### II-1 Matrice élastomère

Selon l'invention, la matrice élastomère comprend plus de 50 pce d'au moins un copolymère contenant des unités éthylène et des unités diéniques (ci-après dénommé « le copolymère »).

Par « matrice élastomère », on entend l'ensemble des élastomères de la composition.

Par « copolymère contenant des unités éthylène et des unités diéniques », on entend tout copolymère comprenant, au sein de sa structure, au moins des unités éthylène et des unités diéniques. Le copolymère peut ainsi comprendre des unités monomères différentes des unités éthylène et des unités diéniques. Par exemple, le copolymère peut comprendre également des unités alpha-oléfines, notamment des unités alpha-oléfines ayant de 3 à 18 atomes de carbone, avantageusement ayant 3 à 6 atomes de carbone. Par exemple, les unités alpha-oléfines peuvent être choisies dans le groupe constitué par le propylène, le butène, le pentène, l'hexène ou leurs mélanges.

De manière connue, l'expression « unité éthylène » fait référence au motif $-(CH_2-CH_2)-$résultant de l'insertion de l'éthylène dans la chaîne élastomère.

On entend « par unité diénique », une unité monomère issue de l'insertion d'un motif monomère résultant de la

polymérisation d'un monomère diène conjugué ou d'un monomère diène non conjugué, l'unité diénique comportant une double liaison carbone-carbone. De préférence, les unités diéniques sont choisies dans le groupe constitué par les unités butadiènes, les unités isoprènes et les mélanges de ces unités diéniques. En particulier, les unités diéniques du copolymère peuvent être des unités 1,3-diène ayant 4 à 12 atomes de carbone, par exemple des unités 1,3-butadiène, 2-méthyl-1,3-butadiène. De préférence encore, les unités diéniques sont majoritairement, voire préférentiellement exclusivement, des unités 1,3-butadiène.

Dans le copolymère, les unités éthylène représentent avantageusement entre 50% et 95% en mole des unités monomères du copolymère, c'est-à-dire entre 50% et 95% en moles des unités monomères du copolymère. Avantageusement, les unités éthylène dans le copolymère représentent entre 55% et 90%, de préférence de 60% à 90%, de préférence de 70% à 85%, en mole des unités monomères du copolymère.

Avantageusement, le copolymère (c'est-à-dire pour rappel l'au moins un copolymère contenant des unités éthylène et des unités diéniques) est un copolymère d'éthylène et de 1,3-diène (de préférence de 1,3-butadiène), c'est-à-dire, selon l'invention, un copolymère constitué exclusivement d'unités éthylène et d'unité 1,3-diène (de préférence de 1,3-butadiène).

Lorsque le copolymère est un copolymère d'éthylène et d'un 1,3-diène, celui-ci contient avantageusement des unités de formule (I) et/ou (II). La présence de motif cyclique saturé à 6 membres, 1,2-cyclohexanediyle, de formule (I) comme unité monomère dans le copolymère peut résulter d'une série d'insertions très particulières de l'éthylène et du 1,3-butadiène dans la chaîne polymère au cours de sa croissance.

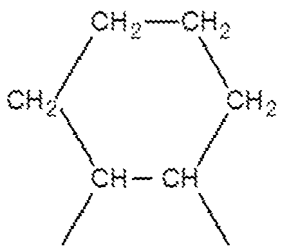

(I)

$$-CH_2-CH(CH=CH_2)- \qquad (II)$$

Par exemple, le copolymère d'éthylène et d'un 1,3-diène peut être dépourvu d'unités de formule (I). Dans ce cas, il contient de préférence des unités de formule (II).

Lorsque le copolymère d'éthylène et d'un 1,3-diène comprend des unités de formule (I) ou des unités de formule (II) ou encore des unités de formule (I) et des unités de formule (II), les pourcentages molaires des unités de formule (I) et des unités de formule (II) dans le copolymère, respectivement o et p, satisfont de préférence à l'équation suivante (eq. 1), de manière plus préférentielle à l'équation (eq. 2), o et p étant calculés sur la base de l'ensemble des unités monomères du copolymère.

$$0 < o+p \leq 25 \qquad (eq. 1)$$

$$0 < o+p < 20 \qquad (eq. 2)$$

Selon l'invention, le copolymère, de préférence le copolymère d'éthylène et d'un 1,3-diène (de préférence de 1,3-butadiène), est un copolymère statistique.

Avantageusement, la masse moyenne en nombre (Mn) du copolymère, de préférence du copolymère d'éthylène et d'un 1,3-diène (de préférence de 1,3-butadiène) est comprise dans un domaine allant de 100 000 à 300 000 g/mol, de préférence de 150 000 à 250 000 g/mol.

La Mn du copolymère est déterminée de manière connue, par chromatographie d'exclusion stérique (SEC) telle que décrite au point IV-1.2 ci-dessous.

Le copolymère peut être obtenu selon différentes méthodes de synthèses connues de l'homme du métier, notamment en fonction de la microstructure visée du copolymère. Généralement, il peut être préparé par copolymérisation au moins d'un diène, de préférence d'un 1,3-diène, de préférence encore le 1,3-butadiène, et d'éthylène et selon des méthodes de synthèse connues, en particulier en présence d'un système catalytique comprenant un complexe métallocène. On peut citer à ce titre les systèmes catalytiques à base de complexes métallocènes, lesquels systèmes catalytiques sont décrits dans les documents EP 1 092 731, WO 2004035639, WO 2007054223 et WO 2007054224

au nom de la Demanderesse. Le copolymère, y compris lorsqu'il est statistique, peut être préparé aussi par un procédé utilisant un système catalytique de type préformé comme ceux décrits dans les documents WO 2017093654 A1, WO 2018020122 A1 et WO 2018020123 A1.

Le copolymère peut être constitué d'un mélange de copolymères contenant des unités éthylène et des unités diéniques qui se différencient des uns des autres par leurs microstructures et/ou par leurs macrostructures.

Selon l'invention, la matrice élastomère peut comprendre au moins un autre élastomère, qui n'est pas un copolymère contenant des unités éthylène et des unités diéniques, mais cela n'est pas nécessaire ni préféré. Ainsi, préférentiellement, le taux de l'au moins un copolymère contenant des unités éthylène et des unités diéniques est compris dans un domaine allant de 50 à 100 pce, de préférence de 60 à 100 pce, de préférence encore de 80 à 100 pce. Avantageusement, l'au moins un copolymère contenant des unités éthylène et des unités diéniques est le seul élastomère de la composition, c'est-à-dire qu'il représente 100% en masse de la matrice élastomère.

Lorsque la matrice élastomère comprend au moins un autre élastomère, qui n'est pas un copolymère contenant des unités éthylène et des unités diéniques, l'au moins un autre élastomère peut être un élastomère diénique, par exemple choisi dans le groupe constitué par les polybutadiènes (BR), le caoutchouc naturel (NR), les polyisoprènes de synthèse (IR), les copolymères de butadiène, les copolymères d'isoprène, et les mélanges de ces élastomères. Les copolymères de butadiène sont particulièrement choisis dans le groupe constitué par les copolymères de butadiène-styrène (SBR).

## II-2 Polyéthylène

La composition de caoutchouc selon l'invention a également pour caractéristique essentielle de comprendre au moins 3 pce d'un polyéthylène.

De manière surprenante, la Demanderesse a trouvé qu'il était possible de remplacer tout ou partie des charges renforçantes utilisées classiquement dans les compositions de caoutchouc notamment destinées à la fabrication de pneumatique par un polyéthylène et d'obtenir des compositions de caoutchouc qui présentent des propriétés mécaniques significativement améliorées.

Le polyéthylène (aussi appelé « PE ») est une polyoléfine semi-cristalline appartenant à la famille des polymères thermoplastiques.

Dans le cadre de la présente invention, le terme « polyéthylène » désigne les homopolymères d'éthylène, c'est-à-dire des polymères obtenus à partir de l'éthylène comme seul monomère. Toutefois, il n'est pas exclu que des monomères de propylène, de butène-1, d'hexène-1 ou d'octène-1 soient présents dans ce polymère. Cependant, si ces monomères sont présents, ils le sont à titre d'impureté et en faible proportions, de préférence inférieur à 5% en poids par rapport au poids total du polyéthylène et des impuretés. Les copolymères d'éthylène et de propylène (aussi appelé EP, EPM ou EPR pour « éthylène propylène rubber ») n'entrent pas dans le cadre de la définition de polyéthylène mentionnée ci-dessus.

De préférence, le polyéthylène utilisable dans le cadre de la présenté invention est un polyéthylène non-réticulé. Par « polyéthylène non-réticulé », on entend au sens de la présente invention un polyéthylène qui n'a pas subi de réaction de réticulation. Il ne s'agit donc pas d'un polyéthylène réticulé aussi appelé PER (ou « PEX » en anglais pour « PE crosslinked »). Les polyéthylènes réticulés PER sont obtenus par polymérisation de monomère d'éthylène suivi d'une réaction de réticulation qui peut être une réticulation à l'aide d'un peroxyde (procédé PEX-A), une réticulation par irradiation (procédé PEX-C), une réticulation par silane et d'un catalyseur de réticulation (procédé PEX-B). Bien entendu, le polyéthylène non-réticulé peut subir une étape de réticulation après son incorporation dans une composition de caoutchouc conforme à l'invention, par exemple lors de la cuisson d'un pneumatique comprenant une composition de caoutchouc conforme à l'invention.

Préférentiellement, le polyéthylène est choisi dans le groupe constitué par les polyéthylènes haute densité (« PE-HD » ou aussi « HDPE » pour « high density polyethylene »), les polyéthylènes basse densité (« PE-BD » ou aussi « LDPE » pour «low density polyethylene »), les polyéthylènes basse densité linéaire (« PE-BDL » ou aussi « LLDPE » pour «linear low density polyethylene »), les polyéthylènes moyenne densité (« PE-MD » ou « MDPE » pour « medium density polyethylene »), les polyéthylènes de masse moléculaire très élevée (« PE-UHMW »), les polyéthylènes de très basse densité (« PE-VLD ») et les mélanges de ces polyéthylènes. Les polyéthylène haute densité sont particulièrement préférés.

Préférentiellement, le polyéthylène, notamment de haute densité, a une densité comprise dans un domaine allant de 940 à 970 kg/$m^3$, plus préférentiellement dans un domaine allant de 940 à 965 kg/$m^3$, encore plus préférentiellement dans un domaine allant de 950 à 970 kg/$m^3$. La densité est mesurée à 23°C selon la norme ISO 1183-2019.

Préférentiellement, le polyéthylène, notamment de haute densité, a un indice de fluidité à 190°C sous 5 kg compris dans un domaine allant de 2 à 25 g/10 min, de préférence compris dans un domaine allant de 2,5 à 22 g/10min, plus préférentiellement encore compris dans un domaine allant 10 à 25 g/10 min. L'indice de fluidité à chaud (MFR 190°C/5 Kg) (« MFR » pour « Mass Flow Rate » est mesuré selon la norme ISO 1133-1-2012 à 190°C à travers une filière normalisée sous l'action d'un piston lesté d'une masse de 5 Kg).

Le polyéthylène utilisable dans le cadre de l'invention peut être un polyéthylène fonctionnalisé ou non fonctionnalisé.

Par « polyéthylène non-fonctionnalisé », on entend un polyéthylène qui n'a pas été modifié après sa polymérisation par greffage d'un groupe fonctionnel comprenant au moins un hétéroatome choisi parmi Si, N, S, O et Cl. Autrement dit le polyéthylène non-fonctionnalisé consiste essentiellement en un mélange d'atomes de carbone et d'hydrogène et ne comprend pas d'hétéroatomes choisi dans le groupe consiste par Si, N, S, O et Cl. Si ces hétéroatomes sont présents dans le polyéthylène, ils le sont à titre d'impureté.

Plus préférentiellement encore, le polyéthylène est un polyéthylène non-fonctionnalisé et de préférence non-réticulé, notamment de haute densité, a une densité mesurée à 23°C selon la norme ISO 1183-2019 comprise dans un domaine allant de 940 à 970 kg/m$^3$ et un indice de fluidité à chaud (190°C/5 Kg) mesurée selon la norme ISO 1133-1-2012 compris dans un domaine allant de 2 à 25 g/10 min. De manière encore plus préférée, le polyéthylène non-fonctionnalisé et de préférence non-réticulé, notamment de haute densité, a une densité mesurée à 23°C selon la norme ISO 1183-2019 compris dans un domaine allant de 950 à 970 kg/m$^3$ et un indice de fluidité à chaud (190°C/5 Kg) compris dans un domaine allant de 10 à 25 g/10 min.

Le polyéthylène non-fonctionnalisé utilisable peut être obtenu par les procédés classiques connus comme notamment la polymérisation en présence de catalyseurs métallocènes. A l'issue de la polymérisation, le polyéthylène est granulé sans aucune réaction de réticulation. Les polyéthylènes non-fonctionnalisés sont disponibles commercialement auprès de fournisseurs tels que Dow Global Technologies, BASF, Silon, ENI ...

Le polyéthylène utilisable dans le cadre de l'invention peut également être un polyéthylène fonctionnalisé. Par « polyéthylène fonctionnalisé », on entend au sens de la présente invention un polyéthylène qui a subi une réaction de modification, après sa polymérisation, de façon à comporter au moins un groupe fonctionnel comprenant au moins un hétéroatome choisi dans le groupe constitué par Si, N, O, S et Cl. Conviennent particulièrement à titre de groupes fonctionnels ceux comprenant au moins une fonction telle que : le silanol, un alcoxysilane, un atome de chlore. La modification ou la fonctionnalisation d'un polyéthylène peut s'effectué par tout moyen connu notamment par greffage de groupement fonctionnel comprenant au moins un hétéroatome. A l'issue de cette réaction, le polyéthylène fonctionnalisé ne subit pas de réaction de réticulation. Les polyéthylènes fonctionnalisés peuvent être disponibles commercialement auprès de fournisseurs tels que Dow Global Technologies, BASF, Silon, ENI ...

Préférentiellement, le polyéthylène fonctionnalisé et de préférence non réticulé comprend au moins un groupe fonctionnel alcoxysilane. Dans la suite de la description, ce polyéthylène sera désigné l'expression « polyéthylène fonctionnalisé alcoxysilane » ou par l'expression « polyethylene greffé silane (en anglais « silane-grafted polyethylene ») » ou par « polyéthylène alcoxysilane » ; ces trois expressions étant équivalentes et interchangeables.

Le polyéthylène fonctionnalisé alcoxysilane est obtenu en greffant un composé silane de formule (I) sur le polyéthylène

$$CH_2=CR-(COO)_x(C_nH_{2n})ySiR'_3 \qquad (I)$$

dans laquelle :

- R est un atome d'hydrogène ou un groupe méthyle ;
- x, y est un nombre entier égal à 0 ou 1 avec la condition que lorsque x=1 alors y=1
- n est un nombre entier allant de 1 à 12 ; de préférence de 1 à 4 ;
- chaque R', identique ou différent, est un groupe chimique choisi dans le groupe constitué par les groupes alcoxy ayant de 1 à 12 atomes de carbone (par exemple le méthoxy, l'éthoxy, le butoxy), les groupes aryloxy ayant de 6 à 12 atomes de carbone (par exemple le phenoxy), les groupe acyloxy aliphatiques ayant de 1 à 12 atomes de carbone (par exemple formyloxy, acetyloxy, propanoyloxy) les groupes aminé substitués ou non substitués (par exemple alkylamino).

En particulier, les composés de formule (I) préférés peuvent être ceux pour lesquels : - R est un atome d'hydrogène ou un groupe méthyle ; - x, y est un nombre entier égal à 0 ou 1 avec la condition que lorsque x=1 alors y=1 - n est un nombre entier allant de 1 à 12 ; de préférence de 1 à 4; - chaque R', identique ou différent, est un groupe alcoxy ayant de 1 à 12 atomes de carbone, de préférence le méthoxy, l'éthoxy, le butoxy.

Le greffage du composé de formule (I) sur le polyéthylène peut s'effectuer par une réaction radicalaire en présence de peroxydes. La réaction de greffage peut s'effectuer dans une extrudeuse. En sortie d'extrudeuse, on obtient un polyéthylène greffé silane et non-réticulé. Un exemple de procédé de greffage est décrit aux paragraphes [0042] à [0048] du document EP2407496A1. Les polyéthylènes greffés silanes sont disponibles commercialement auprès de fournisseurs tels que Dow Global Technologies, BASF, Silon, ENI ...

Préférentiellement, le polyéthylène fonctionnalisé et de préférence non-réticulé, notamment le polyéthylène fonctionnalisé alcoxysilane, peut être choisi dans le groupe constitué par les polyéthylènes haute densité, les polyéthylènes basse densité, les polyéthylènes basse densité linéaire, les polyéthylènes moyenne densité, les polyéthylènes de masse moléculaire très élevée, les polyéthylènes de très basse densité et les mélanges de ces polyéthylènes. Plus préférentiellement encore, le polyéthylène fonctionnalisé et non-réticulé, en particulier polyéthylène fonctionnalisé alcoxysilane et non-réticulé, est un polyéthylène de haute densité.

Préférentiellement, le polyéthylène fonctionnalisé et de préférence non-réticulé, notamment polyéthylène fonctionnalisé alcoxysilane, a une densité comprise dans un domaine allant de 940 à 970 kg/$m^3$, plus préférentiellement dans un domaine allant de 940 à 965 kg/$m^3$. La densité est mesurée à 23°C selon la norme ISO 1183-2019.

Préférentiellement, le polyéthylène fonctionnalisé et de préférence non-réticulé, notamment le polyéthylène fonctionnalisé alcoxysilane et non-réticulé, a un indice de fluidité à 190°C sous 5 kg compris dans un domaine allant de 2 à 25 g/10 min, de préférence compris dans un domaine allant de 2,5 à 22 g/10 min. L'indice de fluidité à chaud (MFR 190°C/5 Kg) (« MFR » pour « Mass Flow Rate » est mesuré selon la norme ISO 1133-1-2012 à 190°C à travers une filière normalisée sous l'action d'un piston lesté d'une masse de 5 Kg).

Plus préférentiellement encore le polyéthylène fonctionnalisé et de préférence non-réticulé, notamment le polyéthylène fonctionnalisé alcoxysilane, a une densité mesurée à 23°C selon la norme ISO 1183-2019 comprise dans un domaine allant de 940 à 970 kg/$m^3$ et un indice de fluidité à chaud (MFR 190°C/5 Kg) mesuré selon la norme ISO 1133-1-2012 compris dans un domaine allant de 2 à 25 g/10 min. De manière encore plus préférée, sa densité mesurée à 23°C selon la norme ISO 1183-2019 est comprise dans un domaine allant de 940 à 960 kg/$m^3$ et présentant un indice de fluidité à chaud (190°C/5 Kg) compris dans un domaine allant de 2 à 10 g/10 min.

Préférentiellement, le taux de polyéthylène dans la composition de caoutchouc, qu'il soit fonctionnalisé, notamment alcoxysilane, ou non-fonctionnalisé est compris dans un domaine allant de 3 pce à 75 pce, de préférence de 4 à 60 pce, de préférence encore de 5 à 50 pce.

II-3 Charge renforçante

La composition de caoutchouc conforme à l'invention a pour autre caractéristique essentielle de comprendre de 0 à 50 pce de charge renforçante. En d'autres, la composition peut ne pas comprendre de charge renforçante, ou s'il elle en comprend, à un taux qui est inférieur à 50 pce.

Avantageusement, le taux de charge renforçante dans la composition selon l'invention, est compris dans un domaine allant de 0 à 40 pce, de préférence de 0 à 35 pce, de préférence de 0 à 20 pce. Par exemple, le taux de charge renforçante dans la composition selon l'invention peut être compris dans un domaine allant de 2 à 40 pce, par exemple de 5 à 35 pce, par exemple de 5 à 20 pce.

La charge renforçante peut être tout type de charge dite renforçante, connue pour ses capacités à renforcer une composition de caoutchouc utilisable notamment pour la fabrication de pneumatiques, par exemple une charge organique telle que du noir de carbone, une charge inorganique telle que de la silice ou encore un mélange de ces deux types de charges. Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm. Avantageusement, la charge renforçante est choisi parmi les noirs de carbone, les silices et leurs mélanges.

Comme noirs de carbone conviennent tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO97/36724-A2 ou WO99/16600-A1).

Avantageusement, si une charge renforçante est présente dans la composition, elle comprend majoritairement, de préférence exclusivement, du noir de carbone.

Lorsqu'une charge inorganique renforçante est utilisée, il peut s'agir notamment des charges minérales du type siliceux, préférentiellement la silice ($SiO_2$) ou du type alumineux, en particulier l'alumine ($Al_2O_3$). La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 $m^2$/g, de préférence comprises dans un domaine allant de 30 à 400 $m^2$/g, notamment de 60 à 300 $m^2$/g.

Par « charge inorganique renforçante », doit être entendue ici toute charge inorganique ou minérale, quelles que soient sa couleur et son origine (naturelle ou de synthèse), encore appelée charge « blanche », charge « claire » ou même charge « non-noire » par opposition au noir de carbone, capable de renforcer à elle seule, sans autre moyen qu'un agent de couplage intermédiaire, une composition de caoutchouc destinée à la fabrication de pneumatiques. De manière connue, certaines charges inorganiques renforçantes peuvent se caractériser notamment par la présence de groupes

hydroxyle (-OH) à leur surface.

On peut utiliser tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ® 5000GR », « Ultrasil ® 7000GR » de la société Evonik, les silices « Zeosil ® 1085GR», « Zeosil® 1115 MP », « Zeosil® 1165MP », « Zeosil® Premium 200MP », « Zeosil® HRS 1200 MP » de la Société Solvay. À titre de silice non HDS, les silices commerciales suivantes peuvent être utilisées : les silices « Ultrasil ® VN2GR », « Ultrasil ® VN3GR » de la société Evonik, la silice « Zeosil® 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

La charge inorganique renforçante peut être un mélange de différentes charges inorganiques renforçantes, auquel cas les proportions de charge inorganique renforçante dans la charge renforçante se rapportent à l'ensemble des charges inorganiques renforçantes.

Pour coupler la charge inorganique renforçante à l'élastomère diénique, on peut utiliser de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère diénique. Par exemple, un tel composé bifonctionnel peut comprendre un premier groupe fonctionnel comprenant un atome de silicium, le dit premier groupe fonctionnel étant apte à interagir avec les groupes hydroxyles d'une charge inorganique et un second groupe fonctionnel comprenant un atome de soufre, le dit second groupe fonctionnel étant apte à interagir avec l'élastomère diénique.

Préférentiellement, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que l'octanethioate de S-(3-(triéthoxysilyl)propyle)commercialisé par la société Momentive sous la dénomination « NXT Silane ». Plus préférentiellement, l'organosilane est un organosilane polysulfuré.

Bien entendu pourraient être également utilisés des mélanges des agents de couplage précédemment décrits.

Lorsqu'une charge inorganique renforçante est utilisée, la teneur en agent de couplage dans la composition de l'invention peut aisément être ajustée par l'homme du métier. Typiquement le taux d'agent de couplage représente de 0,5% à 15% en poids par rapport à la quantité de charge inorganique renforçante.

<u>II-4 Système de réticulation</u>

Le système de réticulation peut être tout type de système connu de l'homme de l'art dans le domaine des compositions de caoutchouc pour pneumatique. Il peut notamment être à base de soufre et/ou de peroxyde et/ou de bismaléimides.

De manière préférentielle, le système de réticulation comprend, de préférence consiste en un peroxyde, de préférence un peroxyde organique.

Par « peroxyde organique », on entend un composé organique, c'est-à-dire contenant du carbone, comportant un groupe -O-O- (deux atomes d'oxygène liés par une liaison covalente simple). Durant le procédé de réticulation, le peroxyde organique se décompose au niveau de sa liaison instable O-O en radicaux libres. Ces radicaux libres permettent la création des liaisons de réticulation.

Le peroxyde organique est de préférence choisi dans le groupe comprenant ou consistant en les peroxydes de dialkyle, les monoperoxycarbonates, les peroxydes de diacyle, les peroxycétales ou les peroxyesters.

De préférence, les peroxydes de dialkyle sont choisis dans le groupe comprenant ou consistant en le peroxyde de dicumyle, le peroxyde de di-t-butyle, peroxyde de t-butylcumyle, le 2,5-diméthyl-2,5-di(t-butylperoxy)hexane, le 2,5-diméthyl-2,5-di(t-amylperoxy)-hexane, le 2,5-diméthyl-2,5-di(t-butylperoxy)hexyne-3, le 2,5-diméthyl-2,5-di(t-amylperoxy)hexyne-3, $\alpha,\alpha'$-di-[(t-butyl-peroxy)isopropyl] benzène, le $\alpha,\alpha'$-di-[(t-amyl-peroxy)isopropyl] benzène, le peroxyde de di-t-amyle, le 1,3,5-tri-[(t-butylperoxy)isopropyl]benzène, le 1,3-diméthyl-3-(t-butylperoxy)butanol, et le 1,3-diméthyl-3-(t -amylperoxy) butanol.

Certains monoperoxycarbonates tels que le OO-tert-butyl-O-(2-éthylhexyl) monoperoxycarbonate, OO-tert-butyl-O-isopropyl monoperoxycarbonate et OO-tert-amyl-O-2-éthyl hexyl monoperoxycarbonate, peuvent également être utilisés.

Parmi les peroxydes de diacyles, le peroxyde préféré est le peroxyde de benzoyle.

Parmi les peroxycétales, les peroxydes préférés sont choisis dans le groupe comprenant ou consistant en le 1,1-di-(t-butylperoxy)-3,3,5-triméthylcyclohexane, le 4,4-di-(t-butylperoxy)valérate de n-butyle, le 3,3-di-(t-butylperoxy)butyrate d'éthyle, le 2,2-di-(t-amylperoxy)-propane, le 3,6,9-triethyl-3,6,9-trimethyl-1,4,7-triperoxynonane (ou peroxyde de méthyl éthyl cétone trimère cyclique), le 3,3,5,7,7-pentamethyl-1,2,4-trioxepane, le 4,4-bis(t-amylperoxy)valérate de n-butyle, le 3,3-di(t-amylperoxy)butyrate d'éthyle, le 1,1-di(t-butylperoxy)cyclohexane, le 1,1-di(t-amylperoxy)cyclohexane et leurs mélanges. De préférence, les peroxyesters sont choisis dans le groupe consistant en le tert-butylperoxybenzoate, le tert-butyleperoxy-2-ethylhexanoate et le tert-butyleperoxy-3,5,5-triméthylehexanoate.

En résumé, le peroxyde organique est, de manière particulièrement préférée, choisi dans le groupe constitué par le peroxyde de dicumyle, les peroxydes d'aryle ou de diaryle, le peroxyde de diacétyle, le peroxyde de benzoyle, le peroxyde de dibenzoyle, le peroxyde de ditertbutyle, le peroxyde de tertbutylcumyle, le 2,5-bis (tertbutylperoxy)-2,5-diméthylhexane, le n-butyl-4,4'-di(tert-butylperoxy) valérate, le OO-(t-butyl)-O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzene et leurs mélanges. De préférence encore le peroxyde organique est choisi dans le groupe constitué par dans le groupe consistant en le peroxyde de dicumyle, le n-butyl-4,4'-di(tert-butylperoxy)-valérate, le OO-(t-butyl) O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzene et leurs mélanges.

Le taux de peroxyde, de préférence de peroxyde organique, dans la composition est avantageusement compris dans un domaine allant de 0,1 à 10 pce, de préférence de 0,5 à 5 pce, de préférence encore de 1 à 4 pce

A titre d'exemple de peroxyde utilisable dans le cadre de la présente invention et disponible dans le commerce, on peut citer le « Dicup » de la société Hercules Powder Co., le « Perkadox Y12 » de la Societe Noury van der Lande, le « Peroximon F40 » de la société Montecatini Edison S.p.A., le « Trigonox » de la Societe Noury van der Lande, le « Varox » de la société R.T.Vanderbilt Co., ou encore le « Luperko », de la société Wallace & Tiernan, Inc.

Par ailleurs, la composition selon l'invention est avantageusement exempte de soufre en tant qu'agent de vulcanisation, ou en contient moins de 0,9 pce, de préférence moins de 0,5 pce, de préférence moins de 0,3 pce, de préférence moins de 0,2 pce et de préférence moins de 0,1 pce. Le soufre peut être du soufre moléculaire ou provenir d'un agent donneur de soufre, tel que les alkyl phénol disulfures (APDS).

II-5 Additifs possibles

Les compositions de caoutchouc selon l'invention peuvent comporter optionnellement également tout ou partie des additifs usuels habituellement utilisés dans les compositions d'élastomères pour pneumatique, comme par exemple des plastifiants (tels que des huiles plastifiantes et/ou des résines plastifiantes), des pigments, des agents de protection tels que cires anti-ozone, anti-ozonants chimiques, anti-oxydants, des agents anti-fatigue, des résines renforçantes (telles que décrites par exemple dans la demande WO 02/10269).

La composition ne requiert pas l'utilisation de résines renforçantes (ou résines durcissantes) connues de l'homme du métier pour rigidifier des compositions de caoutchouc, notamment en augmentant leur Module de Young ou encore le complexe de cisaillement dynamique G*. De manière particulièrement avantageuse, la composition selon l'invention ne comprend pas de résine renforçante ou en comprend moins de 1 pce, de préférence moins de 0,5 pce. Des exemples de tels résines renforçantes peuvent être trouvées au chapitre II.3 de la demande WO20198679A1.

II-6 Préparation des compositions de caoutchouc

Les compositions conformes à l'invention peuvent être fabriquées dans des mélangeurs appropriés, en utilisant deux phases de préparation successives bien connues de l'homme du métier :

- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomérique, la charge renforçante, les éventuels autres additifs divers, à l'exception du système de réticulation. L'incorporation de la charge éventuelle à l'élastomère peut être réalisée en une ou plusieurs fois en malaxant thermomécaniquement. Dans le cas où la charge est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers autres que le système de réticulation. La phase non-productive peut être réalisée à haute température, jusqu'à une température maximale comprise entre 110°C et 200°C, de préférence entre 130°C et 185°C, pendant une durée généralement comprise entre 2 et 10 minutes.
- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C.On incorpore alors le système de réticulation, et le tout est alors mélangé pendant quelques minutes, par exemple entre 5 et 15 min.

De telles phases ont été décrites par exemple dans les demandes EP-A-0501227, EP-A-0735088, EP-A-0810258, WO00/05300 ou WO00/05301.

La composition finale ainsi obtenue est ensuite calandrée par exemple sous la forme d'une feuille ou d'une plaque, notamment pour une caractérisation au laboratoire, ou encore extrudée (ou co-extrudée avec une autre composition de caoutchouc) sous la forme d'un semi-fini (ou profilé) de caoutchouc utilisable par exemple comme flanc de pneumatique. Ces produits peuvent ensuite être utilisés pour la fabrication de pneumatiques, selon les techniques connues de l'homme du métier.

La composition peut être soit à l'état cru (avant réticulation ou vulcanisation), soit à l'état cuit (après réticulation ou vulcanisation), peut être un produit semi-fini qui peut être utilisé dans un pneumatique.

La réticulation (ou cuisson), le cas échéant la vulcanisation, est conduite de manière connue à une température généralement comprise entre 130°C et 200°C, pendant un temps suffisant qui peut varier par exemple entre 5 et 90 min en fonction notamment de la température de cuisson, du système de réticulation adopté et de la cinétique de réticulation de la composition considérée.

### II-7 Pneumatique

La présente invention a également pour objet un pneumatique comprenant une composition de caoutchouc selon l'invention.

La composition définie dans la présente description est particulièrement bien adaptée aux couches internes des pneumatiques. Ainsi, de préférence, la composition selon l'invention est présente au moins dans au moins une couche interne du pneumatique.

Avantageusement, la couche interne du pneumatique est choisie dans le groupe constitué par les nappes carcasse, les nappes sommet, les bourrages-tringle, les pieds sommets, les couches de découplage, les gommes de bordure, les gommes de bourrage, la sous-couche de bande de roulement et les combinaisons de ces couches internes, de préférence la sous-couche de bande de roulement. Dans la présente, on entend par « gomme de bordure », une couche positionné dans le pneumatique directement au contact de l'extrémité d'une nappe de renforcement, de l'extrémité d'un élément de renforcement ou d'une autre gomme de bordure.

Le pneumatique selon l'invention peut être destiné à équiper des véhicules à moteur de type tourisme, SUV ("Sport Utility Vehicles"), ou deux roues (notamment motos), ou avions, ou encore des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, et autres.

## IV- EXEMPLES

### IV-1 Mesures et tests utilisés

#### *IV-1.1 Détermination de la microstructure des élastomères :*

La microstructure des copolymères d'éthylène et de butadiène est déterminée par analyse RMN 1H, suppléée par l'analyse RMN 13C lorsque la résolution des spectres RMN du 1H ne permet pas l'attribution et la quantification de toutes les espèces. Les mesures sont réalisées à l'aide d'un spectromètre RMN BRUKER 500MHz à des fréquences de 500.43 MHz pour l'observation du proton et 125.83MHz pour l'observation du carbone. Pour les élastomères non solubles mais ayant la capacité de gonfler dans un solvant, est utilisée une sonde HRMAS 4mm z-grad permettant d'observer le proton et le carbone en mode découplé du proton. Les spectres sont acquis à des vitesses de rotation de 4000Hz à 5000Hz. Pour les mesures sur des élastomères solubles, est utilisée une sonde RMN liquide permettant d'observer le proton et le carbone en mode découplé du proton. La préparation des échantillons non solubles est faite dans des rotors remplis avec le matériau analysé et un solvant deutéré permettant le gonflement, en général du chloroforme deutéré (CDCl3). Le solvant utilisé doit toujours être deutéré et sa nature chimique peut être adaptée par l'homme du métier. Les quantités de matériau utilisées sont ajustées de façon à obtenir des spectres avec une sensibilité et une résolution suffisantes. Les échantillons solubles sont mis en solution dans un solvant deutéré (environ 25mg d'élastomère dans 1mL), en général du chloroforme deutéré (CDCl3). Le solvant ou coupage de solvant utilisé doit toujours être deutéré et sa nature chimique peut être adaptée par l'homme du métier. Dans les deux cas (échantillon soluble ou échantillon gonflé). Pour la RMN du proton est utilisée une séquence simple impulsion de 30°. La fenêtre spectrale est réglée pour observer l'ensemble des raies de résonances appartenant aux molécules analysées. Le nombre d'accumulations est réglé afin

d'obtenir un rapport signal sur bruit suffisant pour la quantification de chaque motif. Le délai de recyclage entre chaque impulsion est adapté pour obtenir une mesure quantitative. Pour la RMN du carbone est utilisée une séquence simple impulsion 30° avec un découplage du proton uniquement pendant l'acquisition pour éviter les effets « Overhauser Nucléaire » (NOE) et rester quantitatif. La fenêtre spectrale est réglée pour observer l'ensemble des raies de résonances appartenant aux molécules analysées. Le nombre d'accumulations est réglé afin d'obtenir un rapport signal sur bruit suffisant pour la quantification de chaque motif. Le délai de recyclage entre chaque impulsion est adapté pour obtenir une mesure quantitative. Les mesures de RMN sont réalisées à 25°C.

*IV-1.2 Détermination de la macrostructure des polymères par chromatographie d'exclusion stérique (SEC) :*

a) Principe de la mesure :

La chromatographie d'exclusion stérique ou SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier. Associée à 3 détecteurs (3D), un réfractomètre, un viscosimètre et un détecteur de diffusion de la lumière à 90°, la SEC permet d'appréhender la distribution de masses molaires absolues d'un polymère. Les différentes masses molaires absolues moyennes en nombre (Mn), en poids (Mw) et la dispersité (D = Mw/Mn) peuvent également être calculées.

b) Préparation du polymère :

Chaque échantillon est solubilisé dans du tétrahydrofurane à une concentration d'environ 1 g/L. Puis la solution est filtrée sur filtre de porosité 0.45μm avant injection.

c) Analyse SEC 3D :

Pour déterminer la masse molaire moyenne en nombre (Mn), et le cas échant la masse molaire moyenne en poids (Mw) et l'indice de polydispersité (Ip) des polymères, on utilise la méthode ci-dessous.

La masse molaire moyenne en nombre (Mn), la masse molaire moyenne en poids (Mw) et l'indice de polydispersité du polymère (ci-après échantillon) sont déterminés de manière absolue, par chromatographie d'exclusion stérique (SEC : Size Exclusion Chromatography) triple détection. La chromatographie d'exclusion stérique triple détection présente l'avantage de mesurer des masses molaires moyennes directement sans calibration.

La valeur de l'incrément d'indice de réfraction dn/dc de la solution de l'échantillon est mesurée en ligne en utilisant l'aire du pic détecté par le réfractomètre (RI) de l'équipement de chromatographie liquide. Pour appliquer cette méthode, il faut vérifier que 100% de la masse d'échantillon est injectée et éluée au travers de la colonne. L'aire du pic RI dépend de la concentration de l'échantillon, de la constante du détecteur RI et de la valeur du dn/dc.

Pour déterminer les masses molaires moyennes, on utilise la solution à 1g/l précédemment préparée et filtrée que l'on injecte dans le système chromatographique. L'appareillage utilisé est une chaîne chromatographique « WATERS alliance ». Le solvant d'élution est le tétrahydrofurane contenant 250 ppm de BHT (2,6-diter-butyle 4-hydroxy toluène), le débit est de 1 $mL.min^{-1}$, la température du système de 35° C et la durée d'analyse de 60 min. Les colonnes utilisées sont un jeu de trois colonnes AGILENT de dénomination commerciale « PL GEL MIXED B LS». Le volume injecté de la solution de l'échantillon est 100 μL. Le système de détection est composé d'un viscosimètre différentiel Wyatt de dénomination commerciale « VISCOSTAR II », d'un réfractomètre différentiel Wyatt de dénomination commerciale « OPTILAB T-REX » de longueur d'onde 658 nm, d'un détecteur à diffusion de lumière statique multi angle Wyatt de longueur d'onde 658 nm et de dénomination commerciale « DAWN HELEOS 8+ ». Pour le calcul des masses molaires moyennes en nombre et de l'indice de polydispersité, est intégrée la valeur de l'incrément d'indice de réfraction dn/dc de la solution de l'échantillon obtenue ci-dessus. Le logiciel d'exploitation des données chromatographiques est le système « ASTRA de Wyatt ».

*IV-1.3 Détermination de la cristallinité*

La mesure de cristallinité se fait par mesure de l'enthalpie de fusion observée dans le cas des copolymères d'éthylène et de 1,3-diène. Ce phénomène endothermique est observé lors de l'analyse du thermogramme de la mesure DSC (Differential Scanning Calorimetry). La mesure se fait par balayage aller/retour de -150°C à 200°C sous atmosphère inerte (hélium) avec une rampe de 20°C/min.

Le signal correspondant au phénomène endothermique (fusion) est intégré et le taux de cristallinité est le rapport entre l'enthalpie mesurée et celle du polyéthylène parfaitement cristallin (290J/g).

%Cristallinité = (Enthalpie mesurée en J/g)/(enthalpie théorique d'un polyéthylène 100% cristallin en J/g).

*IV-1.4 Propriétés dynamiques (après cuisson): Essai de traction*

Ces essais de traction permettent de déterminer les contraintes d'élasticité et les propriétés à la rupture. Sauf indication différente, ils sont effectués conformément à la norme NF ISO 37 de février 2018. Un traitement des enregistrements de traction permet également de tracer la courbe de module en fonction de l'allongement. Le module utilisé ici étant le module sécant vrai mesuré en première élongation, calculé en se ramenant à la section vraie de l'éprouvette à tout instant du test. On mesure en première élongation les modules sécants nominaux (ou contraintes apparentes, en MPa) à 10%, d'allongement noté MSV10.

Les essais d'allongement rupture (AR%) et de contrainte rupture (CR) sont basées sur la norme NF ISO 37 de Décembre 2005 sur une éprouvette haltère de type H2 et sont mesurés à une vitesse de traction de 500 mm/min. L'allongement rupture est exprimé en % d'allongement. La contrainte rupture est exprimée en MPa.

Toutes ces mesures de traction sont effectuées dans les conditions normales de température (23$\pm$2°C) et d'hygrométrie (50$\pm$5% d'humidité relative), selon la norme française NF T 40-101 (décembre 1979).

Les propriétés dynamiques G*(10%) sont mesurées sur un viscoanalyseur (Metravib VA4000), selon la norme ASTM D 5992-96. On enregistre la réponse d'un échantillon de composition réticulée (éprouvette cylindrique de 4 mm d'épaisseur et de 400 $mm^2$ de section), soumis à une sollicitation sinusoïdale en cisaillement simple alterné, à la fréquence de 10Hz, dans les conditions définies de température par exemple à 60°C selon la norme ASTM D 1349-14. On effectue un balayage en amplitude de déformation de 0,1 à 50% (cycle aller), puis de 50% à 1% (cycle retour). Les résultats exploités sont le module complexe de cisaillement dynamique G*. Pour le cycle retour, on indique le module complexe de cisaillement dynamique G* à 10% de déformation, à 60°C.

Pour plus de lisibilité, les résultats sont indiqués en base 100 (pourcentage), la valeur 100 étant attribuée au témoin. Un résultat supérieur à 100 indiquant une amélioration de la propriété concernée.

IV-2 Synthèse du copolymère

Dans la synthèse de polymères, tous les réactifs sont obtenus commercialement excepté les métallocènes. Le butyloctylmagnésium BOMAG (20% dans l'heptane, C = 0,88 $mol.L^{-1}$) provient de Chemtura et est stocké dans un tube de Schlenk sous atmosphère inerte. L'éthylène, de qualité N35, provient de la société Air Liquide et est utilisé sans purification préalable.

Le copolymère d'éthylène et de 1,3-butadiène : élastomère E1 (conforme à l'invention) est synthétisé selon le mode opératoire décrit ci-après.

Dans un réacteur contenant à 80°C du méthylcyclohexane, ainsi que de l'éthylène (Et) et du butadiène (Bd) dans les proportions indiquées dans le Tableau 1, on ajoute du butyloctylmagnésium (BOMAG) pour neutraliser les impuretés du réacteur, puis le système catalytique (voir Tableau 1). A ce moment, la température de réaction est régulée à 80°C et la réaction de polymérisation démarre. La réaction de polymérisation se déroule à une pression constante de 8 bars. Le réacteur est alimenté tout au long de la polymérisation en éthylène et en butadiène (Bd) dans les proportions définies dans le Tableau 1. La réaction de polymérisation est stoppée par refroidissement, dégazage du réacteur et ajout d'éthanol. Un anti-oxydant est ajouté à la solution de polymère. Le copolymère est récupéré par séchage en étuve sous vide jusqu'à masse constante. Le système catalytique est un système catalytique préformé. Il est préparé dans le méthylcyclohexane à partir d'un métallocène, le $[Me_2SiFlu_2Nd(\mu\text{-}BH_4)_2Li(THF)]$, d'un co-catalyseur, le butyloctylmagnésium (BOMAG), et d'un monomère de préformation, le 1,3-butadiène, dans les teneurs indiquées dans le Tableau 1. Il est préparé selon une méthode de préparation conforme au paragraphe II.1 de la demande de brevet WO 2017/093654 A1.

La microstructure du copolymère E1 et ses propriétés figurent dans les Tableaux 2 et 3. Pour la microstructure, la Tableau 2 indique les taux molaires des unités éthylène (Eth), des unités du 1,3-butadiène, des motifs 1,2-cyclohexanediyle (cycle).

[Tableau 1]

| Synthèse | E1 |
|---|---|
| Concentration métallocène (mmol/L) | 0,07 |
| Concentration agent alkylant (mmol/L) | 0,33 |
| Ratio molaire monomère préformation/ métal Nd | 90 |
| Composition de l'alimentation (%mol Et/Bd) | 80/20 |

[Tableau 2]

| Elastomère | E1 |
|---|---|
| Ethylène (%mol) | 79 |
| Butadiène 1,3 (%mol) | 14 |
| 1,2-cyclohexanediyle (%mol) | 7 |

[Tableau 3]

| Elastomère | E1 |
|---|---|
| Tg (°C) | -41 |
| Mn (g/mol) | 130 700 |

IV-3 Préparation des compositions

Dans les exemples qui suivent, les compositions caoutchouteuses ont été réalisées comme décrit au point II-6 ci-dessus. En particulier, la phase « non-productive » a été réalisée dans un mélangeur de 0,4 litres pendant 2 minutes, pour une vitesse moyenne de palettes de 80 tours par minute jusqu'à atteindre une température maximale de tombée de 130°C. La phase « productive » a été réalisée dans un outil à cylindre à 23°C pendant 10 minutes.

La réticulation de la composition a été conduite dans un moule de type plaque MA à une température de 170°C pendant 15 minutes, sous pression.

IV-4 Essais de caoutchouterie

Les exemples présentés ci-dessous ont pour objet de comparer les propriétés mécaniques de 3 compositions conformes à l'invention (C1, C2, C3) avec deux compositions témoin (T1 et T2). Les Tableaux 4 et 5 présentent les compositions testées (en pce), ainsi que les résultats obtenus.

[Tableau 4]

| Composants | **T1** | **C1** | **C2** | **C3** |
|---|---|---|---|---|
| NR(1) | - | - | - | - |
| EBR(2) | 100 | 100 | 100 | 100 |
| HDPE(3) (%vol) | - | 13 (10) | 28 (20) | 55 (33) |
| Peroxyde(4) | 1 | 1 | 1 | 1 |
| Propriétés | | | | |
| MSV10 | 100 | 220 | 340 | 820 |
| AR (%) | 100 | 255 | 641 | 873 |
| CR | 100 | 161 | 467 | 1 050 |

(1) Caoutchouc naturel
(2) Elastomère E1 préparé ci-dessus : Elastomère à 79% en mole d'unité éthylène, 7% en mole d'unité 1,2-cyclohexanediyle, 8% en mole de motif 1,2, 6% en mole de motif 1,4
(3) Polyéthylène de haute densité « 427985 » de la société Sigma-Aldrich. Densité = 0,952g/$cm^3$ mesurée selon la norme ISO 1183-2019. Indice de fluidité à chaud (MFR) = 12g/10 min mesuré à 190°C sous l'action d'un piston lesté d'une masse de 5kg conformément à la norme ISO 1133-1-2012
(4) Peroxyde « Dicup » de la société Sigma-Aldrich

[Tableau 5]

| Composants | **T2** | **C3** |
|---|---|---|
| NR(1) | 100 | - |
| EBR(2) | - | 100 |

(suite)

| Composants | T2 | C3 |
|---|---|---|
| HDPE(3) (%vol) | 52 (33) | 55 (33) |
| Peroxyde(4) | 1 | 1 |
| Propriétés | | |
| MSV10 | 100 | 121 |
| G* à 10% | 100 | 300 |
| AR (%) | 100 | 166 |
| CR | 100 | 121 |
| (1) à (4) : voir Tableau 4 | | |

Les inventeurs ont mis en évidence que l'association spécifique d'un copolymère contenant des unités éthylène et des unités diéniques et d'un polyéthylène, conformément à l'invention, permet d'améliorer de manière importante l'ensemble des propriétés mécaniques mesurées, en particulier les propriétés limites.

## Revendications

1. Composition de caoutchouc à base d'une matrice élastomère contenant plus de 50 pce d'au moins un copolymère contenant des unités éthylène et des unités diéniques, de 0 à 50 pce de charge renforçante, d'au moins 3 pce d'un polyéthylène et d'un système de réticulation.

2. Composition de caoutchouc selon la revendication 1, dans laquelle le copolymère contenant des unités éthylène et des unités diéniques est un copolymère d'éthylène et de 1,3-diène.

3. Composition de caoutchouc selon la revendication 2, dans laquelle le 1,3-diène est le 1,3-butadiène.

4. Composition de caoutchouc selon l'une quelconque des revendications précédentes, dans laquelle les unités éthylène dans le copolymère représentent entre 50% et 95%, de préférence entre 55% et 90%, en mole des unités monomères du copolymère.

5. Composition de caoutchouc selon l'une quelconque des revendications précédentes, dans laquelle le copolymère est un copolymère statistique.

6. Composition de caoutchouc selon l'une quelconque des revendications précédentes, dans laquelle le polyéthylène est un polyéthylène non-réticulé.

7. Composition de caoutchouc selon l'une quelconque des revendications précédentes, dans laquelle le polyéthylène est choisi dans le groupe constitué par les polyéthylènes haute densité, les polyéthylènes basse densité, les polyéthylènes basses densité linéaire, les polyéthylènes moyenne densité, les polyéthylènes de masse moléculaire très élevée, les polyéthylènes de très basse densité et les mélanges de ces polyéthylènes, de préférence le polyéthylène est un polyéthylène non-réticulé de haute densité.

8. Composition de caoutchouc selon l'une quelconque des revendications précédentes, dans laquelle le polyéthylène a une densité comprise dans un domaine allant de 940 à 970 $kg/m^3$, plus préférentiellement dans un domaine allant de 940 à 965 $kg/m^3$.

9. Composition de caoutchouc selon l'une quelconque des revendications précédentes, dans laquelle le polyéthylène a un indice de fluidité à 190°C sous 5 kg compris dans un domaine allant de 2 à 25 g/10 min, de préférence compris dans un domaine allant de 2,5 à 22 g/10 min.

10. Composition de caoutchouc selon l'une quelconque des revendications précédentes, dans laquelle le polyéthylène est fonctionnalisé.

**11.** Composition de caoutchouc selon la revendication 10, dans laquelle, le polyéthylène fonctionnalisé comprend au moins un groupe fonctionnel alcoxysilane.

**12.** Composition de caoutchouc selon l'une quelconque des revendications précédentes, dans laquelle le taux de polyéthylène est compris dans un domaine allant de 3 à 75 pce, de préférence de 4 à 60 pce.

**13.** Composition de caoutchouc selon l'une quelconque des revendications précédentes, dans laquelle le taux de charge renforçante est compris dans un domaine allant de 0 à 40 pce, de préférence de 0 à 35 pce,

**14.** Composition de caoutchouc selon l'une quelconque des revendications précédentes, dans laquelle la charge renforçante est choisi parmi les noirs de carbone, les silices et leurs mélanges.

**15.** Pneumatique comprenant une composition de caoutchouc définie à l'une quelconque des revendications 1 à 14, de préférence présente dans au moins une couche interne du pneumatique.

**Patentansprüche**

**1.** Kautschukzusammensetzung auf Basis einer Elastomermatrix, enthaltend mehr als 50 phe mindestens eines Copolymers, das Ethylen-Einheiten und Dien-Einheiten enthält, 0 bis 50 phe verstärkenden Füllstoff, mindestens 3 phe Polyethylen und ein Vernetzungssystem.

**2.** Kautschukzusammensetzung nach Anspruch 1, wobei es sich bei dem Copolymer, das Ethylen-Einheiten und Dien-Einheiten enthält, um ein Copolymer von Ethylen und 1,3-Dien handelt.

**3.** Kautschukzusammensetzung nach Anspruch 2, wobei es sich bei dem 1,3-Dien um 1,3-Butadien handelt.

**4.** Kautschukzusammensetzung nach einem der vorhergehenden Ansprüche, wobei die Ethylen-Einheiten in dem Copolymer zwischen 50 und 95 Mol-%, vorzugsweise zwischen 55 und 90 Mol-%, der Monomereinheiten des Copolymers ausmachen.

**5.** Kautschukzusammensetzung nach einem der vorhergehenden Ansprüche, wobei es sich bei dem Copolymer um ein statistisches Copolymer handelt.

**6.** Kautschukzusammensetzung nach einem der vorhergehenden Ansprüche, wobei es sich bei dem Polyethylen um ein unvernetztes Polyethylen handelt.

**7.** Kautschukzusammensetzung nach einem der vorhergehenden Ansprüche, wobei das Polyethylen aus der Gruppe bestehend aus Polyethylenen hoher Dichte, Polyethylenen niedriger Dichte, linearen Polyethylenen niedriger Dichte, Polyethylenen mittlerer Dichte, Polyethylenen mit ultrahohem Molekulargewicht, Polyethylen sehr niedriger Dichte und Mischungen dieser Polyethylene ausgewählt ist und es sich vorzugsweise bei dem Polyethylen um ein unvernetztes Polyethylen hoher Dichte handelt.

**8.** Kautschukzusammensetzung nach einem der vorhergehenden Ansprüche, wobei das Polyethylen eine Dichte im Bereich von 940 bis 970 kg/$m^3$, weiter bevorzugt in einem Bereich von 940 bis 965 kg/$m^3$, aufweist.

**9.** Kautschukzusammensetzung nach einem der vorhergehenden Ansprüche, wobei das Polyethylen einen Schmelzindex bei 190 °C unter 5 kg in einem Bereich von 2 bis 25 g/10 min, vorzugsweise in einem Bereich von 2,5 bis 22 g/10 min, aufweist.

**10.** Kautschukzusammensetzung nach einem der vorhergehenden Ansprüche, wobei das Polyethylen funktionalisiert ist.

**11.** Kautschukzusammensetzung nach Anspruch 10, wobei das funktionalisierte Polyethylen mindestens eine Alkoxysilan-Funktion umfasst.

**12.** Kautschukzusammensetzung nach einem der vorhergehenden Ansprüche, wobei der Gehalt an Polyethylen in einem Bereich von 3 bis 75 phe, vorzugsweise von 4 bis 60 phe, liegt.

13. Kautschukzusammensetzung nach einem der vorhergehenden Ansprüche, wobei der Gehalt an verstärkendem Füllstoff in einem Bereich von 0 bis 40 phe, vorzugsweise von 0 bis 35 phe, liegt.

14. Kautschukzusammensetzung nach einem der vorhergehenden Ansprüche, wobei der verstärkende Füllstoff aus Rußen, Kieselsäuren und Mischungen davon ausgewählt ist.

15. Reifen, umfassend eine Kautschukzusammensetzung gemäß einem der Ansprüche 1 bis 14, die vorzugsweise in mindestens einer Innenschicht des Reifens vorliegt.

**Claims**

1. Rubber composition based on an elastomer matrix containing more than 50 phr of at least one copolymer containing ethylene units and diene units, on from 0 to 50 phr of reinforcing filler, on at least 3 phr of a polyethylene and on a crosslinking system.

2. Rubber composition according to Claim 1, wherein the copolymer containing ethylene units and diene units is a copolymer of ethylene and of 1,3-diene.

3. Rubber composition according to Claim 2, wherein the 1,3-diene is 1,3-butadiene.

4. Rubber composition according to any one of the preceding claims, wherein the ethylene units in the copolymer represent between 50 mol% and 95 mol%, preferably between 55 mol% and 90 mol%, of the monomer units of the copolymer.

5. Rubber composition according to any one of the preceding claims, wherein the copolymer is a random copolymer.

6. Rubber composition according to any one of the preceding claims, wherein the polyethylene is a non-crosslinked polyethylene.

7. Rubber composition according to any one of the preceding claims, wherein the polyethylene is selected from the group consisting of high density polyethylenes, low density polyethylenes, linear low density polyethylenes, medium density polyethylenes, ultra high molecular weight polyethylenes, very low density polyethylenes, and mixtures of these polyethylenes, preferably the polyethylene is a high density non-crosslinked polyethylene.

8. Rubber composition according to any one of the preceding claims, wherein the polyethylene has a density within a range extending from 940 to 970 $kg/m^3$, more preferentially within a range extending from 940 to 965 $kg/m^3$.

9. Rubber composition according to any one of the preceding claims, wherein the polyethylene has a melt flow rate at 190°C under 5 kg within a range extending from 2 to 25 g/10 min, preferably within a range extending from 2.5 to 22 g/10 min.

10. Rubber composition according to any one of the preceding claims, wherein the polyethylene is functionalized.

11. Rubber composition according to Claim 10, wherein the functionalized polyethylene comprises at least one alkoxysilane functional group.

12. Rubber composition according to any one of the preceding claims, wherein the content of polyethylene is within a range extending from 3 to 75 phr, preferably from 4 to 60 phr.

13. Rubber composition according to any one of the preceding claims, wherein the content of reinforcing filler is within a range extending from 0 to 40 phr, preferably from 0 to 35 phr.

14. Rubber composition according to any one of the preceding claims, wherein the reinforcing filler is selected from carbon blacks, silicas, and mixtures thereof.

15. Tyre comprising a rubber composition defined in any one of Claims 1 to 14, preferably present in at least one internal layer of the tyre.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 1092731 A
- WO 2004035639 A
- WO 2007054223 A
- WO 2007054224 A
- WO 2017093654 A1
- WO 2018020122 A1
- WO 2018020123 A1
- EP 2407496 A1
- WO 9736724 A2
- WO 9916600 A1
- WO 03016215 A1
- WO 03016387 A1
- WO 0210269 A
- WO 20198679 A1
- WO 9736724 A
- WO 9916600 A
- EP 0501227 A
- EP 0735088 A
- EP 0810258 A
- WO 0005300 A
- WO 0005301 A